(19) Europäisches Patentamt
European Patent Office
Office européen des brevets

(11) Numéro de publication : 0 519 771 A2

(12) # DEMANDE DE BREVET EUROPEEN

(21) Numéro de dépôt : **92401382.4**

(22) Date de dépôt : **21.05.92**

(51) Int. Cl.$^5$ : **C08G 61/12,** C08G 61/02, H01B 1/12

(30) Priorité : **18.06.91 FR 9107421**

(43) Date de publication de la demande : **23.12.92 Bulletin 92/52**

(84) Etats contractants désignés : **DE GB**

(71) Demandeur : **THOMSON-CSF**
**51, Esplanade du Général de Gaulle**
**F-92800 Puteaux (FR)**

(72) Inventeur : **Sagnes, Olivier**
**THOMSON-CSF, SCPI, Cédex 67**
**F-92045 Paris la Défense (FR)**
Inventeur : **Dubois, Jean-Claude**
**THOMSON-CSF, SCPI, Cédex 67**
**F-92045 Paris la Défense (FR)**
Inventeur : **Massardier, Valérie**
**THOMSON-CSF, SCPI, Cédex 67**
**F-92045 Paris la Défense (FR)**
Inventeur : **Tran Van Hoang**
**THOMSON-CSF, SCPI, Cédex 67**
**F-92045 Paris la Défense (FR)**
Inventeur : **Guyot, Alain**
**THOMSON-CSF, SCPI, Cédex 67**
**F-92045 Paris la Défense (FR)**

(74) Mandataire : **Guérin, Michel et al**
**THOMSON-CSF SCPI B.P. 329**
**F-92402 COURBEVOIE CEDEX (FR)**

(54) **Procédé d'obtention de polymère de type polyparaphénylène vinylène ou de type polyparathiénylène vinylène.**

(57) L'invention concerne un procédé original d'obtention de polymères de type polyparaphénylène vinylène ou de type polyparathienylène vinylène utilisant un précurseur polyélectrique à base de sulfoniums. Un traitement acide d'un tel précurseur permet d'obtenir directement les polymères souhaités.

Ces polymères de fortes masses moléculaires sont particulièrement intéressants dans le domaine de la plasturgie.

EP 0 519 771 A2

La présente invention concerne un procédé original d'obtention de polymères de type polyparaphénylène vinylène substitués ou non, ou de type polyparathienylène vinylène substitués ou non.

Ces polymères sont susceptibles de présenter de fortes masses moléculaires, comparables à celles des polyéthylènes les rendant particulièrement intéressants dans le domaine de la plasturgie où ils peuvent être usinés sous forme de fibres, de films ou de gels. Ils peuvent de plus être dopés pour présenter des propriétés conductrices suffisantes afin d'être exploités en tant que matériaux antistatiques capables de dissiper des charges.

Jusqu'à ce jour, une des voies les plus performantes de synthèse du polyparaphénylène vinylène comprend la synthèse d'un précurseur polyélectrolyte à base de sulfoniums.

L'obtention d'un tel précurseur est décrite à la figure 1. Il s'agit de la méthode de Wessling utilisant un produit aromatique dihalogené réagissant sur un sulfure aliphatique ou cyclique en vue d'obtenir un monomère comprenant des sulfoniums. La polymérisation du monomère soluble dans l'eau est effectuée par un traitement à la soude, à froid.

Le précurseur P1 ainsi obtenu est généralement pyrolysé à haute température (supérieure à 250°C) sous balayage d'azote, afin d'obtenir le polyparaphenylène vinylène.Cette technique présente l'intérêt de permettre une élimination quasi parfaite des sulfoniums. Le schéma de pyrolyse est indiqué à la figure 2. Ce type de synthèse offre de très bons rendements cependant l'étape de pyrolyse coûte très chère en énergie. C'est pourquoi, plus récemment, certains travaux ont porté sur d'autres moyens d'élimination des sulfoniums. Ainsi la substitution du sulfonium par un groupement alcoxy susceptible de s'éliminer en milieu acide a été proposée. Il est néanmoins encore nécessaire de chauffer à une température voisine de 200°C pour éliminer les groupements alcoxy afin d'obtenir le polyparaphénylène vinylène. Le schéma réactionnel de cette synthèse est illustré à la figure 3.

L'élimination des sulfoniums peut aussi être réalisée en milieu basique en présence de méthanol. On ne peut s'affranchir de chauffer légèrement mais le principal inconvénient de cette synthèse reste le taux insuffisant de conversion voisin de 90 % des sulfoniums (figure 4).

Dans ce contexte, la présente invention propose un procédé original d'obtention de polymères de classe C1 de type polyparaphénylène vinylène dont le noyau benzenique est substitué ou non ou de polymères de classe C2 de type polyparathienylène vinylène dont le noyau de type thiophène est substitué ou non, caractérisé en ce qu'il comprend les étapes suivantes :

- Synthèse d'un précurseur $P_1$ polyélectrolyte comprenant des sulfoniums correspondant à la classe C1 :

$P_1$ :

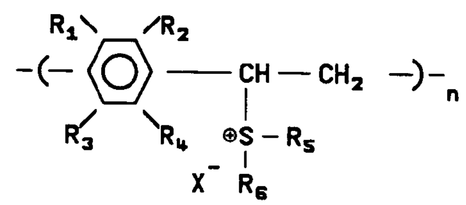

ou d'un précurseur $P_2$ polyélectrolyte comprenant des sulfoniums, correspondant à la classe C2 :

$P_2$ :

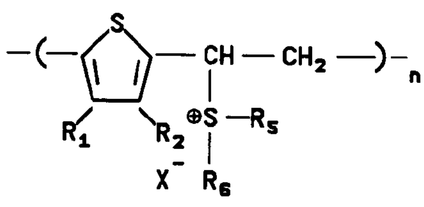

**avec n** : degré de polymérisation,
**$R_1$, $R_2$, $R_3$, $R_4$** étant rien ou des substituants de type alkyl ou alcoxy ou sulfonique ou alkylsulfonique,
**$R_5$,$R_6$** étant des substituants alkyl,
**X** étant un halogène.

- Traitement par un acide fort du précurseur $P_1$ ou du précurseur $P_2$.

De préférence, le traitement acide est réalisé sur un film de polymère de classe C1 ou de polymère de classe C2.

De préférence, le traitement acide est effectué à la température ambiante.

Le procédé de l'invention permet d'obtenir de forts taux de conversion des sulfoniums ne nécessitant pas d'étape de pyrolyse toujours chère en apport énergétique.

Le traitement acide permet de plus d'obtenir des polymères dopés présentant une conductivité non négligeable les rendant très intéressants pour dissiper les charges dans les composants pour l'électronique par exemple.

L'invention sera mieux comprise et d'autres avantages apparaitront à la lecture de la description qui va suire et des figures annexées parmi lesquelles :

- la figure 1 montre le schéma réactionnel de la synthèse d'un précurseur $P_1$ ou d'un précurseur $P_2$, selon l'art connu ;
- la figure 2 illustre l'obtention du polyparaphenylène vinylène à partir de la pyrolyse d'un précurseur $P_1$ ;
- la figure 3 montre un procédé d'élimination des sulfoniums du précurseur $P_1$, selon l'art antérieur ;
- la figure 4 montre un autre procédé d'élimination des sulfoniums du précurseur $P_1$ selon l'art antérieur ;
- la figure 5 illustre une étape d'élimination de sulfoniums d'un précurseur $P_1$ en présence d'acide sulfurique ;
- la figure 6 montre le spectre infrarouge réalisé sur le précurseur polyélectrolyte correspondant aux polyparaphenylène vinylène (PPV) ;
- la figure 7 montre le spectre infrarouge réalisé sur un PPV obtenu par attaque acide selon le procédé de l'invention ;
- la figure 8 montre le spectre infrarouge réalisé sur un PPV obtenu par pyrolyse selon l'art antérieur.

Dans le procédé d'obtention de polymères de classe C1 ou de classe C2, l'élimination directe des sulfoniums en milieu acide constitue en même temps une étape de dopage permettant d'obtenir de manière simple des polymères ayant des propriétés conductrices intéressantes. Dans le procédé selon l'invention, on préfère mettre sous forme de film le précurseur $P_1$ ou $P_2$ avant d'effectuer le traitement acide, on évite ainsi tout risque d'entraîner une précipitation du polymère ayant déjà partiellement réagi.

Le film de polyélectrolyte précurseur peut être obtenu par moulage sous vide à une température variant selon la nature du polyélectrolyte. Le film ainsi réalisé est plongé dans un acide fort concentré pouvant être de l'acide sulfurique, de l'acide méthane sulfonique ou de l'acide perchlorique. Le film est maintenu dans l'acide jusqu'à ce qu'on n'observe plus de dégagement gazeux. Le temps de contact est variable selon l'épaisseur du film réalisé.

On peut alors traiter le film trempé en milieu acide, par une solution d'acétonitrile afin d'ôter l'excès d'acide. Le film est enfin séché sous courant d'azote.

Exemple de synthèse du polyparaphenylène vinylène en présence d'acide sulfurique concentré (95-97 %)

L'attaque du précurseur par l'acide sulfurique est illustré par la figure 5 dans le cadre de l'obtention de polyparaphenylène vinylène.

Dans cet exemple de synthèse le contre ion du précurseur employé est l'ion chlorure $\mathbf{Cl^-}$. L'intense dégagement d'acide chlorhydrique observé au cours de la réaction suggère un mécanisme dans lequel les protons de l'acide sulfurique pourraient se combiner avec les contre ions chlorures pour former l'acide chlorhydrique volatil. Les anions $\mathbf{SO_4}^{2-}$ ou $\mathbf{HSO_4^-}$ seraient susceptibles d'attaquer les hydrogènes en position (γ) par rapport au sulfonium.

L'attaque a été réalisée sur un film de précurseur de 10 μm d'épaisseur de couleur jaune et présentant des propriétés d'isolant. Après être resté trempé 18 heures dans le bain d'acide sulfurique concentré le film présente une couleur brune et une conductivité de 0,4 S/cm. Le produit obtenu a été analysé par infrarouge. Cette analyse a été comparée à une analyse infrarouge d'un polyparaphenylène vinylène obtenu par pyrolyse ainsi qu'à une analyse infrarouge du précurseur.

Le film obtenu après trempage dans un bain d'acide, doit être préalablement dédopé pour effectuer l'analyse infrarouge du polymère seul. Pour cela il est plongé dans l'eau durant plus de 45 minutes.

Les spectres infrarouge du précurseur polyélectrolyte, du polyparaphenylène vinylène obtenu par le procédé de l'invention et d'un polyparaphenylène vinylène obtenu par pyrolyse selon l'art antérieur sont respectivement illustrés par les figures 6, 7 et 8.

Les spectres des figures 6 et 7 montrent une différence prononcée portant sur les bandes caractéristiques du tétrahydrothiophène (2960, 1301 et 1013 $cm^{-1}$) relatives au sulfonium. Dans le spectre de la figure 7 ces bandes sont nettement moins intenses prouvant l'élimination des sulfoniums. Les spectres des figures 7 et 8 montrent que les produits obtenus sont les mêmes dans le cas d'une attaque acide ou dans le cas d'une pyrolyse.

Parallèlement l'analyse élémentaire en chlore effectuée sur le produit obtenu par le procédé de l'invention montre qu'il reste 1,54 % de chlore dans le produit final, les atomes de chlore constituant les contre ions des

sulfoniums témoignent de la présence de sulfoniums restant. Le taux de conversion est donc de 98,46 %. Ce taux est aussi performant que celui obtenu avec un précurseur pyrolysé conduisant à un taux de 98,3 % après un traitement thermique de 2 heures à 180°C.

Etude de la conductivité d'un polymère obtenu par le procédé de l'invention et de celle d'un polymère obtenu par pyrolyse puis dopé.

**EXPERIENCE A :**

Un film $F_1$ de précurseur de 15 μm est pyrolysé 2 heures à 250°C en vue d'obtenir un film de polyparaphenylène vinylène. Ce film $F_1$ est ensuite plongé 2 heures dans une solution d'acide sulfurique concentré (95 à 97 %).

**EXPERIENCE B :**

Un film $F_2$ de précurseur de 15 μm est plongé directement 2 heures dans une solution d'acide sulfurique concentré (95 à 97 %).

Après traitement dans le bain d'acide ces 2 films sont rapidement rincés dans de l'eau permutée, puis séchés une dizaine d'heures sous vide en raison des propriétés déshydratantes de l'acide sulfurique qui entraîne la présence d'une quantité d'eau dans les films.

Sur ces deux films on mesure la conductivité puis on étudie le comportement de dédopage des films ayant été trempés dans l'eau pendant un temps t puis séchés 1 heure sous vide à 40°C.

Le tableau I récapitule les mesures de conductivités en S/cm pour les films $F_1$ et $F_2$ en fonction du temps t en secondes :

| conductivité en S/cm | t = 0 | t = 15 | t = 23 | t = 38 | t = 43 |
|---|---|---|---|---|---|
| Film $F_1$ | 0,15 | $1,5\ 10^{-7}$ | $1,5\ 10^{-7}$ | $1,5\ 10^{-7}$ | $10^{-7}$ |
| Film $F_2$ | 0,5 | 0,01 | $2,10^{-4}$ | $10^{-5}$ | $10^{-6}$ |

**TABLEAU I**

Ces résultats montrent que la conduction d'un polymère obtenu par attaque acide d'un précurseur est meilleure que celle d'un polymère obtenu par pyrolyse puis dopé. De plus la chute plus lente de conductivité du film $F_2$ semble montrer que l'acide sulfurique est plus intimement lié au polymère élaboré par voie chimique, ce phénomène est sans doute dû à la présence d'un réseau moins dense, favorisant la pénétration d'agents étrangers au sein des chaines de polymères.

Le procédé d'obtention de polymère de type polyparaphenylène vinylène ou polyparathienylène vinylène obtenu à partir d'un précurseur polyélectrolyte utilisant une attaque chimique directe, s'avère donc particulièrement intéressant en vue d'obtenir des polymères conducteurs.

## Revendications

1. Procédé d'obtention de polymères de classe C1 de type polyparaphenylène vinylène dont le noyau benzenique est substitué ou non ou de classe C2 de polymères de types polyparathienylene vinylène dont le noyau de type thiophène est substitué ou non, caractérisé en ce qu'il comprend les étapes suivantes :
   - Synthèse d'un précurseur $P_1$ polyélectrolyte comprenant des sulfoniums correspondant à la classe (C1)

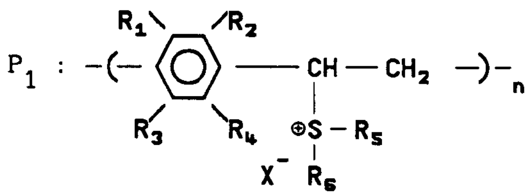

ou d'un précurseur $P_2$ polyélectrolyte comprenant des sulfoniums correspondant à la classe (C2)

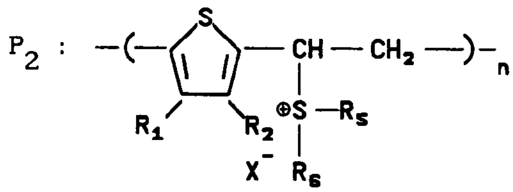

avec **n** degré de polymérisation,
**$R_1$,$R_2$,$R_3$, $R_4$** étant rien ou des substituants de type alkyl ou alcoxy ou sulfonique ou alkylsulfonique,
**$R_5$, $R_6$** étant des substituants alkyl,
**X** étant un halogène.
- Traitement par un acide fort du précurseur $P_1$ ou du précurseur $P_2$.

**2.** Procédé selon la revendication 1, caractérisé en ce que le précurseur $P_1$ ou le précurseur $P_2$ est mis sous forme de film et que le film réalisé est plongé dans un bain d'acide fort concentré.

**3.** Procédé selon l'une des revendications 1 et 2, caractérisé en ce que le traitement du précurseur $P_1$ ou du précurseur $P_2$ est effectué à la température ambiante.

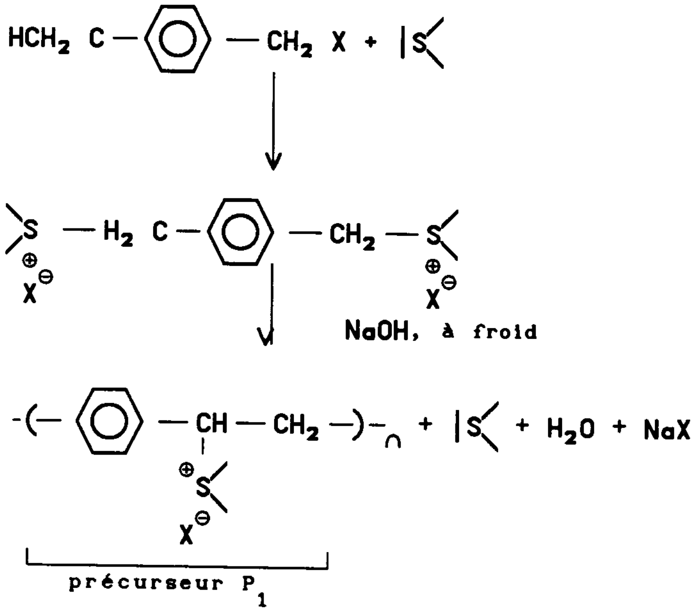


FIGURE I

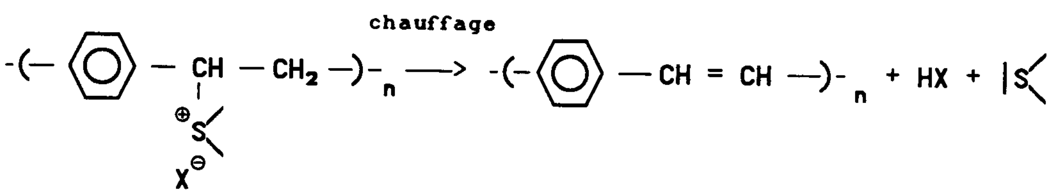


FIGURE II

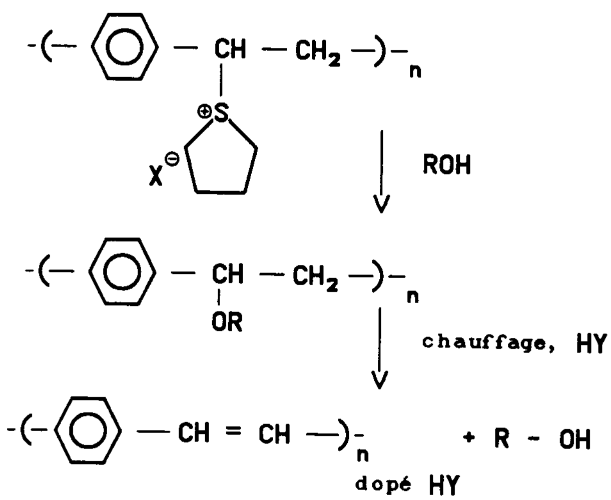


FIGURE III

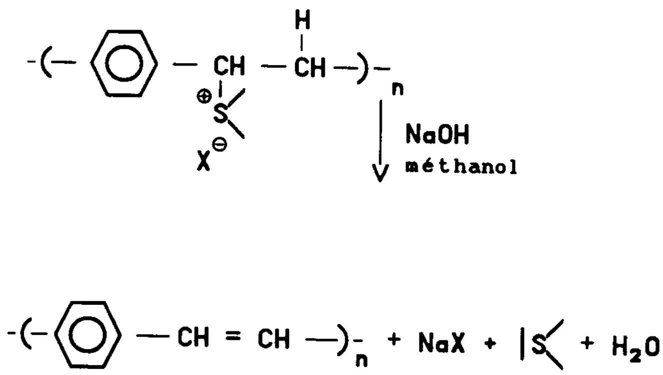


FIGURE IV

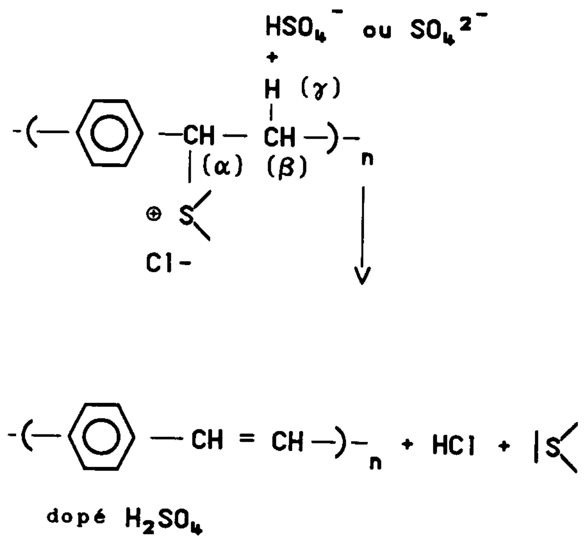


FIGURE V

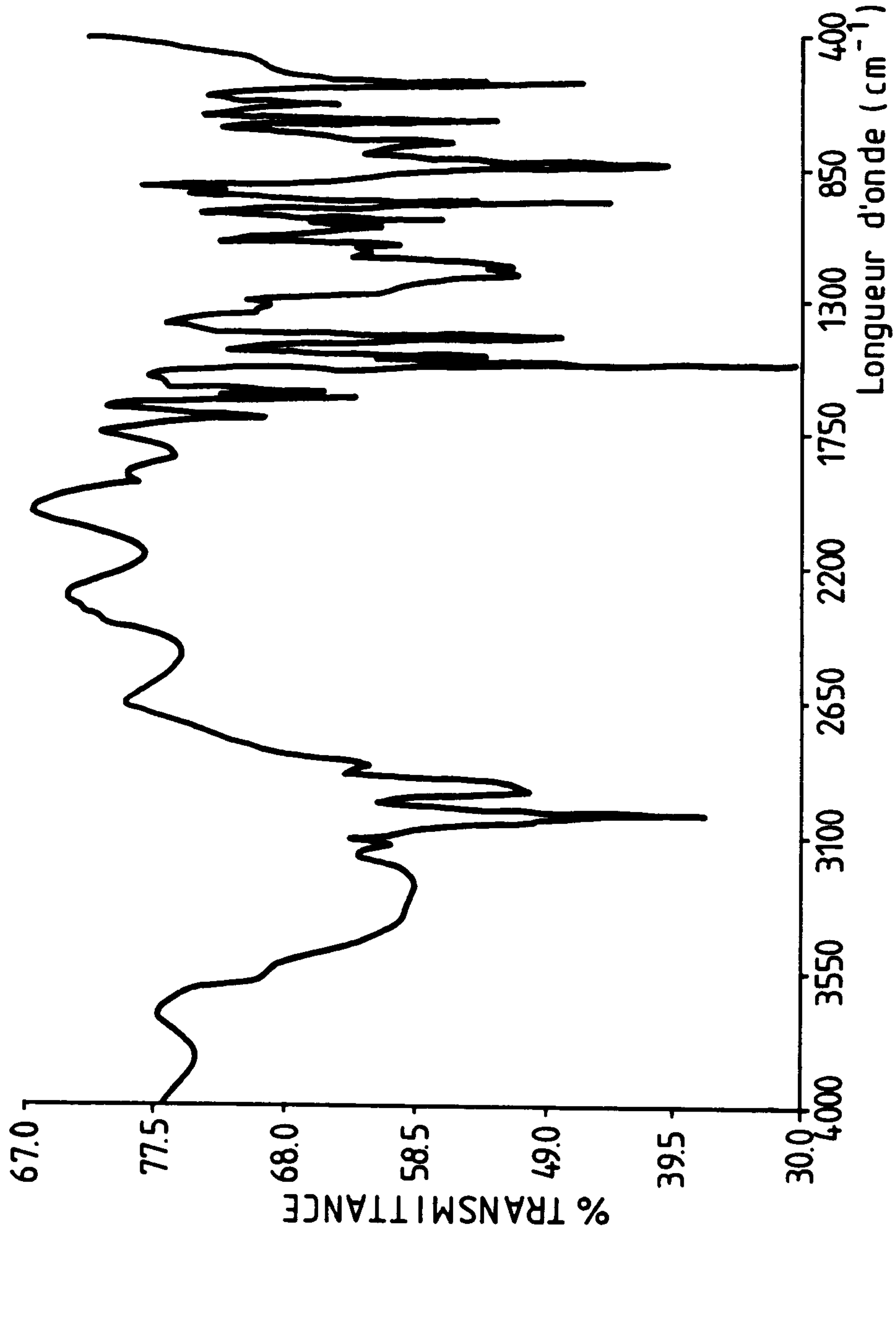
% TRANSMITTANCE
67.0
77.5
68.0
58.5
49.0
39.5
30.0
4000
3550
3100
2650
2200
1750
1300
850
400
Longueur d'onde (cm$^{-1}$)

FIG. 6

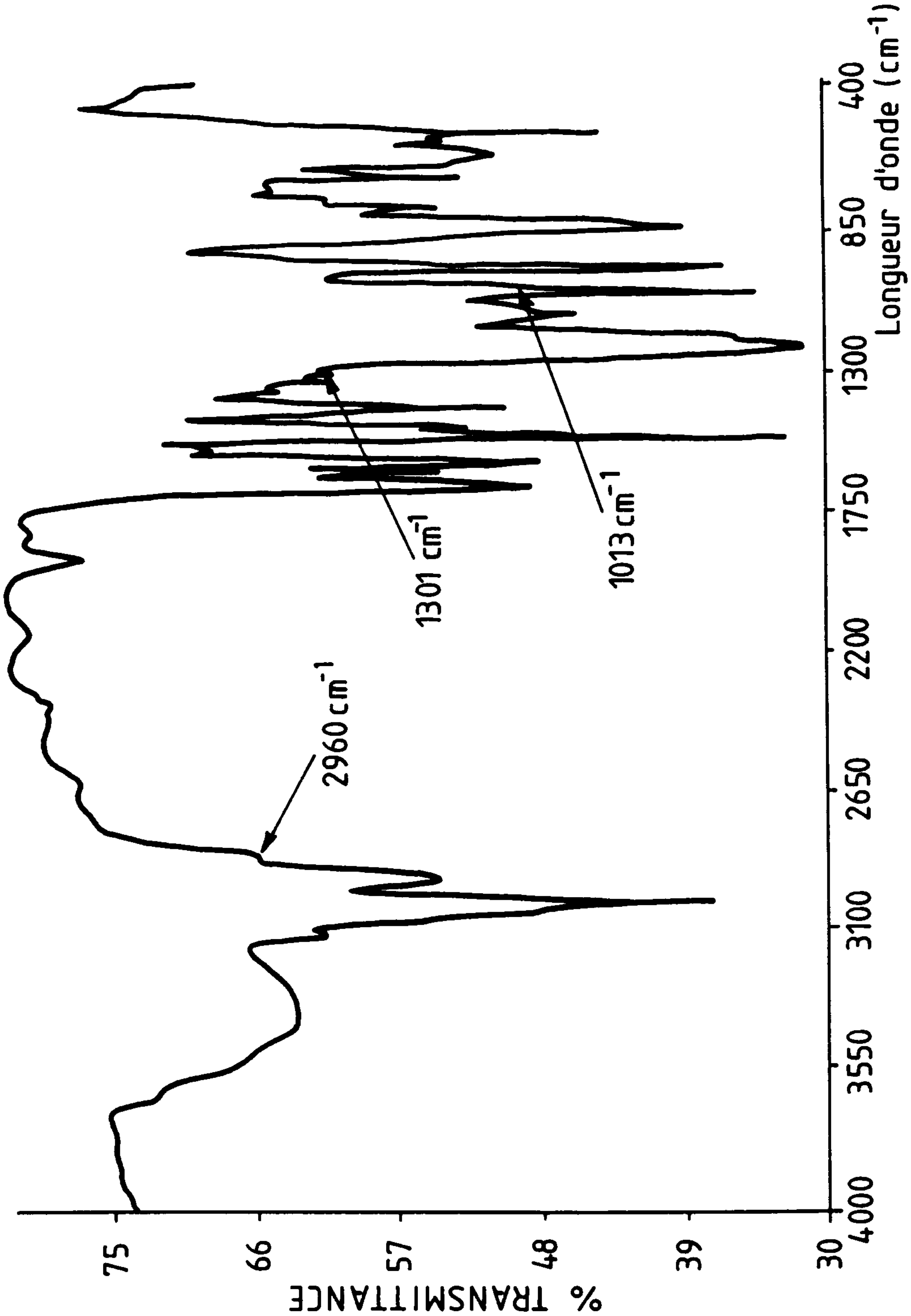
% TRANSMITTANCE
75
66
57
48
39
30
4000
3550
3100
2650
2200
1750
1300
850
400
Longueur d'onde (cm$^{-1}$)
2960 cm$^{-1}$
1301 cm$^{-1}$
1013 cm$^{-1}$

FIG. 7

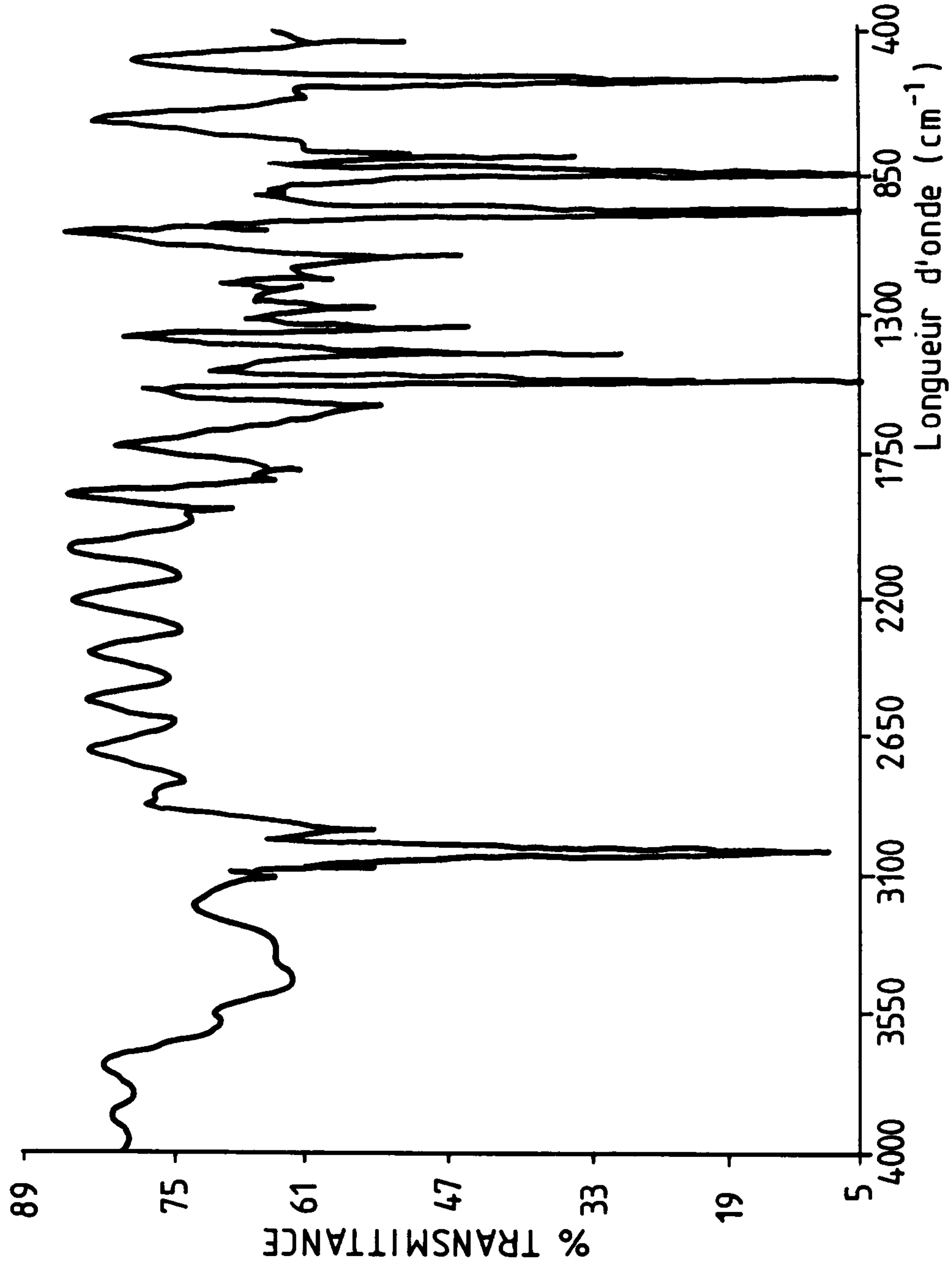
% TRANSMITTANCE
89
75
61
47
33
19
5
4000
3550
3100
2650
2200
1750
1300
850
400
Longueur d'onde (cm$^{-1}$)

FIG. 8